**Europäisches Patentamt**

**European Patent Office**

**Office européen des brevets**

(19)

(11) Publication number : **0 507 540 A2**

## EUROPEAN PATENT APPLICATION

(12)

(21) Application number : **92302812.0**

(22) Date of filing : **31.03.92**

(51) Int. Cl.⁵ : **G06F 13/38**

(30) Priority : **01.04.91 US 678483**

(43) Date of publication of application :
**07.10.92 Bulletin 92/41**

(84) Designated Contracting States :
**DE FR GB IT**

(71) Applicant : **GE FANUC AUTOMATION NORTH AMERICA, INC.**
**Routes 29N and 606**
**Charlottesville, VA 22901 (US)**

(72) Inventor : **Carpenter, Richard A.**
**20 Paynes Court**
**Clifton Park, New York 10265 (US)**
Inventor : **Shank, Thomas A.**
**1017 Tomahawk Trail**
**Scotia, New York 12302 (US)**
Inventor : **Meyers, Roger L.**
**154 Adams Place**
**Delmar, New York 12054 (US)**
Inventor : **Sollecito, Lawrece A.**
**Route 5, Maple Avenue Extension**
**Amsterdam, New York 12010 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Method for operating a networked computer system to minimize data conversion overhead.**

(57) A method is provided for operating a networked computer system including a plurality of computers, some of which exhibit different data formats and some of which exhibit identical data formats. Prior to sending a message from a sending computer to a receiving computer on the network, the sending computer sends its data format requirements to the receiving computer. When the receiving computer receives the message from the sending computer, the message is converted from the data format of the sending computer to the data format of the receiving computer if the data format requirements of the sending and receiving computers are found to be different. The converted message thus generated is then passed to application software. If however, the data format requirements of the sending and receiving computers are found to be the same, then the received message is passed to application software without conversion.

FIG. 2

EP 0 507 540 A2

## BACKGROUND OF THE INVENTION

This invention relates in general to computer networks and, more particularly, to computer networks which employ techniques to increase the reliability and accuracy of information handled by such networks.

In modern factories, industrial and manufacturing processes are typically controlled by several computers including mainframes, minicomputers, personal computers and programmable logic controllers (PLC's) which are networked together. PLC's are a relatively recent development in process control technology. As a part of process control, a programmable logic controller is used to monitor input signals from a variety of input sensors which report events and conditions occurring in a controlled process. For example, a PLC can monitor such input conditions as motor speed, temperature, pressure, volumetric flow and the like. A control program is stored in a memory within the PLC to instruct the PLC what actions to take upon encountering particular input signals or conditions. In response to these input signals provided by input sensors, the PLC derives and generates output signals which are transmitted to various output devices to control the process. For example, the PLC issues output signals to speed up or slow down a motor, open or close a relay, raise or lower temperature or adjust pressure as well as many other possible control functions too numerous to list.

In such modern controlled processes, significant difficulties with respect to data integrity are often encountered when networking together the aforementioned mainframes, minicomputers, personal computers and PLC's. Factory automation requires a very high degree of reliability with respect to both data communication among networked computers and processing internal to the particular computers in the network.

Conventional methods of operating networked computer systems have assumed that reliable data delivery from one computer to another is sufficient to operate a reliable network. However, this is a flawed assumption which does not guarantee the successful processing of a particular data unit. Merely providing for reliable data delivery does not provide for: 1) such undesirable software related events as where database records are undesirably locked by another user; 2) such faulty hardware events as disk crashes; or 3) a combination of undesirable hardware and software events such as a disk drive being out of service during back-up or a particular computer being out of service during a computer upgrade. Simply providing for successful delivery of a data unit to a computer in a network without regard to concern for successful processing of that data unit can result in serious operational difficulties in factory automation system employing such a computer network.

When like computers are coupled together in a networked computer system, such a computer system is referred to as a homogenous system since all computers in the networked system use the same data format. However, in modern networked computer systems, several different types of computers with different data formats are often coupled together to form a heterogenous system. When a computer is said to have a different data format than another computer, this means that each of these computers employs a different binary scheme for representing data. When different types of computers are coupled together they often can not compatibly communicate with each other without some kind of data translation or conversion. In other words, data units which are communicated to a particular computer from a different type of computer must somehow be expressed in a data format which that computer can understand.

To illustrate this incompatibility issue, it is noted that a VAX computer manufactured by Digital equipment Corporation uses an extremely different data format to represent floating point data than a computer employing an Intel 80386 microprocessor. Although each computer uses the same number of bits per data unit, the specific bits of the data units have different meanings in the two types of computers. More specifically, the number, placement and meaning of those bits which represent mantissa, exponent and sign are totally different in these computers. Another example of such data format incompatibilities is observed between the VAX computer and the HP 9000/800 computer manufactured by Hewlett-Packard. Although both of these machines employ 2 bytes to represent a short integer and twos complement binary, in the VAX computer the low order bits are in the first byte whereas in the HP 9000/800 the high order bits are in the first byte.

The classic approach to this data format incompatibility problem is to declare a network wide data format. All data unit communications from any particular computer must be converted or translated to the network data format before being placed on the network. More specifically, a networking program on each computer is responsible for converting data into a well-specified data format before sending a data unit to the network. Similarly, each computer's networking program is responsible for converting from the network format to the computer's native data format when receiving data from the network. This constant data format conversion activity adds a very significant overhead burden to the computers in such a networked system.

Should the native format of any computer happen to match the network format, such computer need not perform conversion. However, all other computers must perform conversion to the network data format when data is sent and received, even if the data is being sent between identical computers in a homogenous system.

## SUMMARY OF THE INVENTION

One object of the present invention is to provide a method of operating a computer network which significantly reduces the network's system overhead by minimizing data conversion activities in a controlled manner.

Another object of the present invention is to provide a method of operating a computer network wherein computers in a homogenous system can avoid all data conversion.

Yet another object of the present invention is to provide a method of operating a computer network which permits computers in a heterogeneous system to avoid data conversion when data is communicated between identical computers.

Still another object of the present invention is to provide a method of operating a computer network which assures the successful processing of a data unit communicated to a particular computer.

Another object of the present invention is to provide a method of operating a computer network which can detect unsuccessful processing of a data unit once the data unit is received by a particular computer on the network.

Yet another object the present invention is to provide a method of operating a computer network which is capable of redirecting a data unit to an alternate processing mechanism when unsuccessful processing of a data unit by a particular computer is detected.

In accordance with the present invention, a method is provided for operating a networked computer system including a plurality of computers. Some of these computers employ identical data formats and some of these computers employ different data formats. Each of the computers exhibit respective data format requirements. The method of the invention includes the steps of sending, by a computer on the network designated a sending computer, the data format requirements of the sending computer to another computer on the network designated a receiving computer. The method further includes the step of sending a data unit message from the sending computer to the receiving computer. The method includes the step of receiving by the receiving computer of the data unit message from the sending computer. The method also includes the step of converting, by the receiving computer, of the data unit message from the data format of the sending computer to the data format of the receiving computer when the data formats of the sending computer and the receiving computer are different, thus generating a converted message which is passed to application software. Otherwise, the data unit message is passed to application software without conversion if the data format of the sending computer and the receiving computer are identical.

## BRIEF DESCRIPTION OF THE DRAWINGS

The features of the invention believed to be novel are specifically set forth in the appended claims. However, the invention itself, both as to its structure and method of operation, may best be understood by referring to the following description and accompanying drawings.

FIG. 1 is a block diagram of a networked computer system in which the method of the present invention may be employed; and

FIG. 2 is a flow chart which depicts a method of operation of a networked computer system in accordance with the present invention.

## DETAILED DESCRIPTION OF THE INVENTION

As stated above the present invention involves a method for reducing data conversion in a networked computer system. One embodiment of the method of the present invention is advantageously employed in a networked computer system which employs a response required protocol in combination with reliable delivery of a data units to provide a guaranteed knowledge of successful processing. This protocol services a network of computer programs executing simultaneously on one or more computers. It requires a network agent (a software program) to assist the movement of data units between client programs.

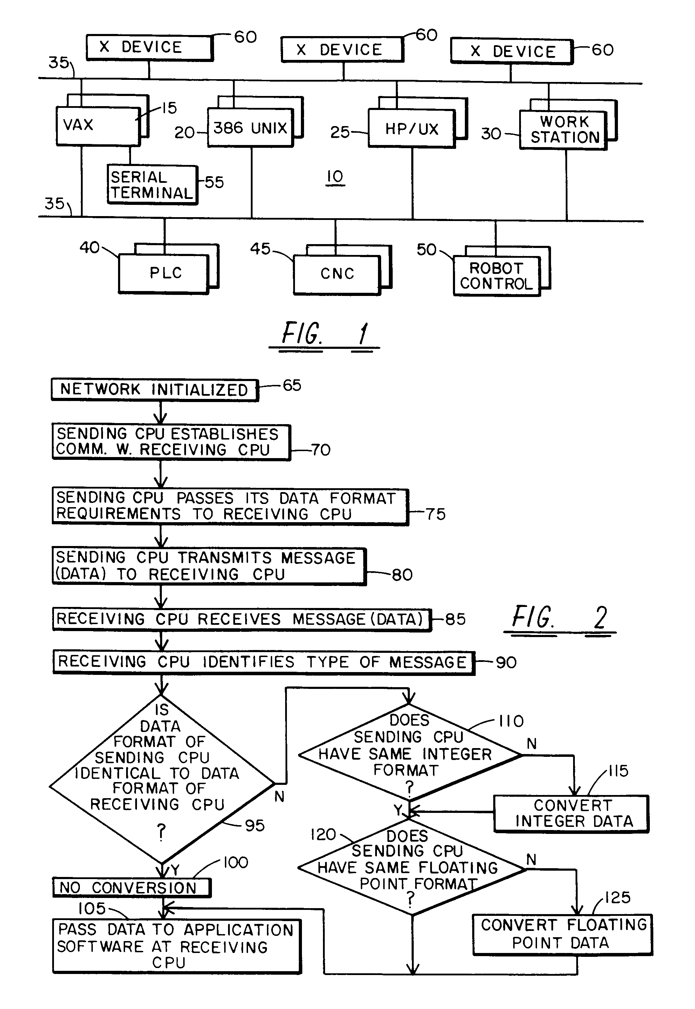

Such a reliable delivery response required protocol is employed in the Cimplicity computer network manufactured by GE Fanuc North America, Inc. One typical configuration of a computer system on which the Cimplicity networking scheme may be employed is illustrated in FIG. 1 as networked computer system 10. System 10 includes a plurality of heterogenous computers with different data formats such as a DEC VAX (VMS) computer 15, an Intel 80386 microprocessor-based computer 20 running Unix or other operating systems, a Hewlett Packard (HP) mini-computer 25 and a Digital Equipment Corp. (DEC) ULTRIX work station 30 running another operating system. Other computers which have the same data formats as the above described machines may also be coupled to system 10. Computers 15, 20, 25 and 30 are all coupled together via an Ethernet local area network (LAN) 35 as illustrated in FIG. 1. Additional computers such as programmable logic controller (PLC) 40, CNC 45 and robot controller 50 are also couplable to LAN 35. In FIG. 1, network 10 is shown as having a serial terminal 55 coupled to VAX computer 15 to enable a user to communicate with that computer. A plurality of X devices or terminals 60 are also coupled into network 10 to facilitate user communication.

To enhance understanding of the method of the invention which is described later, a general description of the operation of the reliable data delivery protocol employed in the Cimplicity network follows.

More specifically, the operation of a computer network employing the Cimplicity reliable data delivery protocol is typified by the following steps:

Step 1) A software program called a network agent is activated on each computer in networked computer system 10. As each network agent on each computer on networked system 10 is started-up or initialized, a communications channel or link is established between that network agent and all other network agents in the system.

Step 2) When a first process or source process (an executing computer program on a particular computer in the network) needs to send a data unit, whose processing must be guaranteed, to a second process or destination process (another program executing on another computer on the network), the data unit is marked as Response Required. The first process also identifies the destination (or target) second process to which the subject data unit is to be communicated. The data unit is then reliably delivered to the network agent for the second process. From the above it will be appreciated that typically, the first process is located on a first computer or source computer and the second process is located on a second computer or destination computer.

Step 3) The network agent at the destination computer or target process will accept the data unit and determine if the message requires a response. If the data unit has been marked as requiring a response, a local database is updated to indicate the destination process, source process and start-up time of the source process.

Step 4) The network agent determines if the destination process is located on a local computer (the same computer that is sending the data unit) or on another computer in the network. If the destination process is local, the data unit is reliably delivered to that process. If the destination process is on another computer, the data unit is reliably delivered to the network agent on that computer.

Step 5) If the data unit cannot be reliably delivered to a destination process on the local computer, or to a network agent of another computer (remote computer) on the network, the local network agent generates a Failure Final Response message. This Failure message is reliably delivered to the originating process. The originating process is then responsible for either sending the data unit to an alternate destination or provide for another appropriate form of recovery.

Step 6) If the data unit cannot be reliably delivered to a remote computer or node due to a temporary lack of resources (on the network or either computer), the network agent detects this transient "congestion". In this case the network agent holds the data unit and retries transmission at a later time. While a data unit is being retried, the originator or source network agent for that data unit will be blocked (execution will be temporarily suspended) if it attempts to send additional data units.

Step 7) When a process receives a Response Required data unit, that process is responsible for processing the data unit. The processing of a data unit may require the return of many additional data units to that process which is designated the source process. In this case, a destination process may return Intermediate Response data units to the originator or source process prior to the return of a Final Response. Intermediate Responses are optional for this protocol and may occur in any number (zero or more). Data units marked as Intermediate Response are assigned a target process "address" and reliably delivered to the network agent.

Step 8) When a destination process completes processing of a data unit it must send a Final Response. Only the Final Response will indicate successful processing of the original data unit. Data units marked as Final Response are assigned a target process "address" and reliably delivered to the network agent.

Step 9) the network agent, when it receives an Intermediate Response or a Final Response will determine whether the target process is local or resident on another computer. Responses for processes executing on a remote computer are reliably delivered to the network agent on that computer.

Step 10) A Response which is targeted for a process executing on the local computer will cause the network agent to verify the Response in its database. If the Response was not Required, the message will be discarded. This is an important step since processes may be stopped and restarted. The address of the restarted process may be the same as an earlier process which generated a request for the processing of a data unit. If that original requester has since terminated, the Response is not expected. In this case the network agent will knowingly and intentionally discard a Response.

Step 11) The network agent will determine when any process on its local computer terminates. When such a client process terminates, the network agent scans its database for Response required data units to that process. All such Response Required data units have Failure Response messages automatically generated and reliably delivered to the originating process.

Step 12) When a client process terminates, the local network agent will send a message to all remote network agents indicating the death of that process. Each network agent will in turn examine its local response Required data base for Response Required data units have Failure Response messages automatically generated and reliably delivered to the originating process.

Step 13) Each network agent will determine when any remote network agent becomes unreachable. This can happen,because of a network failure, a computer failure or a software failure. This can also occur under normal situations when a computer is taken off line for backup or upgrade. When a network agent becomes unavailable, each of the remaining network agents will search their response required database for outstanding Response Required data units sent to the unavailable computer. All such Response Required data units have Failure Response messages automatically generated and reliably delivered to the originating process.

A more complete description of the CIMPLICITY system and protocols is found in "CIMPLICITY System Managers Guide" publication No. GFK 0494 of GE Fanuc Automation North America, Inc., such document being incorporated herein by reference.

FIG. 2 shows a flowchart of the method of the present invention as employed on the above described CIMPLICITY networked computer system of FIG. 1. It will be recalled that this method advantageously operates to minimize data conversions in a networked computer system employing different computers.

The network is first initialized as indicated at initialization block 65. A network agent program which operates in accordance with the flow chart of FIG. 2 is loaded on each computer in the network when the network is initialized. To illustrate the operation of the method, it will be assumed that a sending central processing unit (CPU or computer) has a message that is to be delivered to a receiving CPU. The message may include an integer portion and/or a floating point portion. When a sending CPU has such a message for transmission, the sending CPU first establishes a communications link over the network with the receiving CPU as per block 70. The sending CPU and the receiving exhibit respective data format requirements. The sending CPU then passes its data format requirements over the network to the receiving CPU as per block 75. As seen in block 80, the sending CPU transmits the message (data) over the network to the receiving CPU which receives the message as per block 85.

The receiving CPU starts to identify the type of message as per block 90. More specifically, a test is conducted at block 95 to determine if the data format of the sending CPU is identical to the data format of the receiving CPU. It will be recalled from the above discussion that the received message may include an integer portion and/or a floating point portion. It will also be recalled from the above discussion that the message includes indicia of the data format requirements of the sending CPU. At block 95, the receiving CPU compares the data format requirements of the sending CPU (received in step 75) with the data format requirements of the receiving CPU (itself). If it is determined at block 95 that the data format of the sending CPU is identical to the data format of the receiving CPU, then flow continues to block 100 and no conversion of the data format of the received message is conducted. The received message is passed, unconverted, to application software at the receiving CPU as per block 105.

However, if at block 95 it is determined that the data format of the receiving CPU is not identical to the data format of the sending CPU, then a further test is conducted by the receiving CPU at block 110 to determine if the sending CPU exhibits the same integer format as the receiving CPU. To perform this test, the receiving CPU compares the data format requirements of the sending CPU (received in block 75) with the data format requirements of the receiving CPU itself. If the sending CPU and the receiving CPU do not exhibit the same integer format, then the integer portion of the received message is converted at block 115 from the integer format of the sending CPU to the integer format of the receiving CPU and flow continues to decision block 120. If, however, the sending CPU and the receiving CPU have the same integer format, then flow continues directly to decision block 120 without the message being subjected to such integer format conversion.

At decision block 120, still another test is conducted to determine if the sending CPU exhibits the same floating point format as the receiving CPU. To perform this test, the receiving CPU again compares the data format requirements of the sending CPU (received in block 75) with the data format requirements of the receiving CPU itself. If the sending CPU does not have the same floating point format as the receiving CPU, then any floating point data in the received message is converted into the floating point format of the receiving CPU as per block 125. Flow then continues to block 105 where data from the message is passed to application software which is executing on the receiving CPU. However, if the sending CPU has the same floating point format as the receiving CPU, then no such conversion need be conducted on the floating point portion of the message and the message is passed to the aforementioned application software with the original floating point portion unconverted.

Since numerous techniques of converting integer data in the format of one machine to the format of another machine and for converting floating point data in the format of one machine to the format of another machine are already known to those skilled in the art, a detailed discussion of the conversions in block 115 and 125 is not provided. Those skilled in the art will appreciate that the testing conducted in blocks 95, 110 and 120 have been shown as separate tests for example purposes and that in actual practice some or all of these test may be combined.

The foregoing describes a method for operating a networked computer system which effectively minimizes data conversion overhead while providing reliable delivery of data units. The method further permit computers in a heterogenous networked system to avoid data conversion when data is communicated between identical computers.

While only certain preferred features of the invention have been shown by way of illustration, many modifications and changes will occur to those skilled in the art. It is, therefore, to be understood that the present claims are intended to cover all such modifications and changes which fall within the true spirit of the invention.

**Claims**

1. A method of operating a networked computer system including a plurality of computers, some of said computers employing identical data formats, some of said computers employing different data formats, each of said computers exhibiting respective data format requirements, said method comprising the steps of:

sending, by a computer on said network designated a sending computer, the data format requirements of said sending computer to another computer on said network designated a receiving computer;

sending a data unit message from said sending computer to said receiving computer;

receiving of said data unit message by said receiving computer;

converting, by said receiving computer, of said data unit message from the data format of said sending computer to the data format of said receiving computer when the data formats of said sending computer and said receiving computer are different, thus generating a converted message which is passed to application software; and

otherwise passing said data unit message to said application software without conversion if the data format of said sending computer, and said receiving computer are identical.

2. The method of claim 1 further comprising the steps of:

marking said message as response required prior to transmission from said sending computer to said receiving computer;

testing said message by said receiving computer to determine if said message is marked as response required; and

sending a failure signal from said receiving computer to said sending computer if said message can not be delivered to and processed by designated application software for which it is intended.

3. A method of operating a networked computer system including a plurality of computers, some of said computers having identical data formats and some of said computers having different data formats, said method comprising the steps of:

establishing a communications link from a sending computer to a receiving computer on said system in preparation for sending a message therebetween;

passing data format requirements from said sending computer over said networked system to said receiving computer;

sending a message over said networked system by said sending computer to said receiving computer;

receiving of said message by said receiving computer;

testing by said receiving computer to determine if the data format of said sending computer is identical to the data format of said receiving computer;

passing the message to an application program if it is determined that the data format of the sending computer is identical to the data format of the receiving computer;

converting the data format of the message from the format of said sending computer to the data format of said receiving computer if it is determined that the data format of said sending computer is different from the data format of said receiving computer thus generating a converted message; and

passing the converted message to an application program.

4. The method of claim 3 further comprising the steps of:

marking said message as response required prior to transmission from said sending computer to said receiving computer;

testing said message by said receiving computer to determine if said message is marked as response required; and

sending a failure signal from said receiving computer to said sending computer if said message can not be delivered to and processed by designated application software for which it is intended.

5. A method of operating a networked computer system including a plurality of computers, some of said computers having identical data formats and some of said computers having different data formats, said data formats including at least one of an integer format and a floating point format, said method comprising the steps of:

establishing a communications link from a sending computer to a receiving computer on said system in preparation for sending a message therebetween;

passing data format requirements from said sending computer over said networked system to said receiving computer;

sending a message over said networked system by said sending computer to said receiving computer, said message including at least one of an integer portion and a floating point portion;

receiving of said message by said receiving computer;

testing to determine if said sending computer and said receiving computer have identical integer formats and, if not, converting any integer portion of said message from the integer format of said sending computer to the integer format of said receiving computer;

testing to determine if said sending computer and said receiving computer have identical floating point formats and, if not, converting any floating point portion of said message from the floating point format of said sending computer to the floating point format of said receiving computer; and

passing the message to an application program.

6. The method of claim 5 further comprising the steps of:

marking said message as response required prior to transmission from said sending computer to said receiving computer;

testing said message by said receiving computer to determine if said message is marked as response required; and

sending a failure signal from said receiving computer to said sending computer if said message can not be delivered to and processed by designated application software for which it is intended.

X DEVICE — 60    X DEVICE — 60    X DEVICE — 60

35

VAX — 15    386 UNIX — 20    HP/UX — 25    WORK STATION — 30

SERIAL TERMINAL — 55

10

35

PLC — 40    CNC — 45    ROBOT CONTROL — 50

_FIG. 1_

NETWORK INITIALIZED — 65

SENDING CPU ESTABLISHES COMM. W. RECEIVING CPU — 70

SENDING CPU PASSES ITS DATA FORMAT REQUIREMENTS TO RECEIVING CPU — 75

SENDING CPU TRANSMITS MESSAGE (DATA) TO RECEIVING CPU — 80

RECEIVING CPU RECEIVES MESSAGE (DATA) — 85

RECEIVING CPU IDENTIFIES TYPE OF MESSAGE — 90

_FIG. 2_

IS DATA FORMAT OF SENDING CPU IDENTICAL TO DATA FORMAT OF RECEIVING CPU ? — 95

DOES SENDING CPU HAVE SAME INTEGER FORMAT ? — 110

CONVERT INTEGER DATA — 115

NO CONVERSION — 100

DOES SENDING CPU HAVE SAME FLOATING POINT FORMAT ? — 120

CONVERT FLOATING POINT DATA — 125

PASS DATA TO APPLICATION SOFTWARE AT RECEIVING CPU — 105